Europäisches Patentamt

(19) European Patent Office

Office européen des brevets

(11) Numéro de publication : **0 233 810 B1**

(12) **FASCICULE DE BREVET EUROPEEN**

(45) Date de publication du fascicule du brevet :
04.09.91 Bulletin 91/36

(51) Int. Cl.⁵ : **H05B 6/02, H05B 6/36**

(21) Numéro de dépôt : 87400135.7

(22) Date de dépôt : 20.01.87

(54) **Dispositif à armature articulée pour le chauffage inductif au défilé.**

(30) Priorité : 21.01.86 FR 8600775

(43) Date de publication de la demande :
26.08.87 Bulletin 87/35

(45) Mention de la délivrance du brevet :
04.09.91 Bulletin 91/36

(84) Etats contractants désignés :
AT BE CH DE ES FR GB IT LI LU NL SE

(56) Documents cités :
FR-A- 2 169 964
FR-A- 2 466 306

(56) Documents cités :
US-A- 1 383 963
US-A- 1 996 502
US-A- 3 313 907
US-A- 3 692 969

(73) Titulaire : GEC ALSTHOM SA
38, avenue Kléber
F-75116 Paris (FR)

(72) Inventeur : Chaboseau, Jean
30 rue Louise Chenu
F-94470 Boissy Saint Leger (FR)

(74) Mandataire : Weinmiller, Jürgen et al
Lennéstrasse 9 Postfach 24
W-8133 Feldafing (DE)

## Description

L'invention concerne le chauffage de produits électriquement conducteurs au défilé, par induction électro-magnétique. Elle concerne notamment le chauffage de tôles métalliques et plus particulièrement des bords ou "rives" de celles-ci.

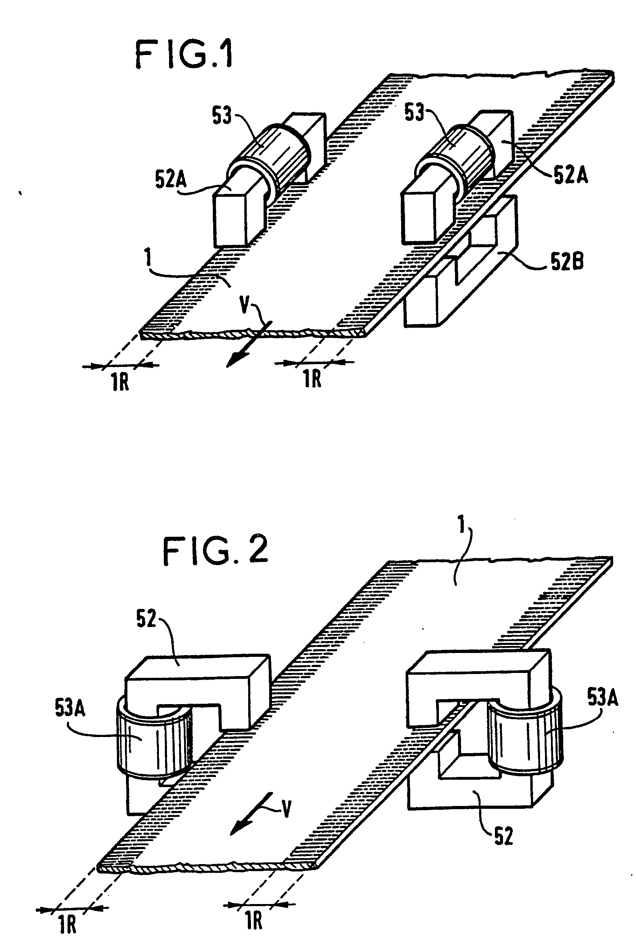

Un dispositif effectuant un tel chauffage est parfois appelé "chauffeuse" et comporte un circuit magnétique en fer feuilleté qui est appelé "armature" et qui est muni d'une bobine d'excitation pour constituer un inducteur. Cette armature peut être construite en deux éléments (ou plus) ou en un seul ; les figures 1 à 5 représentent de tels dispositifs connus.

La figure 1, représente une vue en perspective d'un premier dispositif connu qui est dit "en U". Il est placé au bord de la tôle à traiter. La référence 1 désigne ici et dans la suite une tôle horizontale défilant suivant la flèche "V", la référence 1R désignant la largeur de la rive à chauffer.

L'armature magnétique de la chauffeuse est formée de deux demies armatures : 52A au-dessus de la tôle et 52B au-dessous de celle-ci et la référence 53 désigne la bobine d'induction portée par la demie armature 52A.

Grâce à ces deux demies armatures qui le guident, le flux magnétique créé par cette bobine traverse la tôle à travers un entrefer et y induit le courant électrique qui la chauffe.

La figure 2 représente en perspective un deuxième dispositif connu dit "en C" ; l'armature est représentée en 52 et la bobine d'induction en 53A.

Dans tous les cas la valeur de l'entrefer doit être minimisée si on veut que le rendement du dispositif soit maximisé. Cette valeur ne doit cependant pas être abaissée au-dessous d'une limite qui est définie par l'épaisseur de la plus épaisse des tôles à traiter, augmentée d'une marge de sécurité au moins égale à l'amplitude verticale maximale envisageable des défauts de rectitude qui peuvent constituer des saillies sur la tôle.

Le dispositif "en C" est avantageux car il apparait en pratique qu'on peut fermer le flux avec un seul entrefer par boucle de flux, alors qu'il en faut généralement deux avec le dispositif "en U".

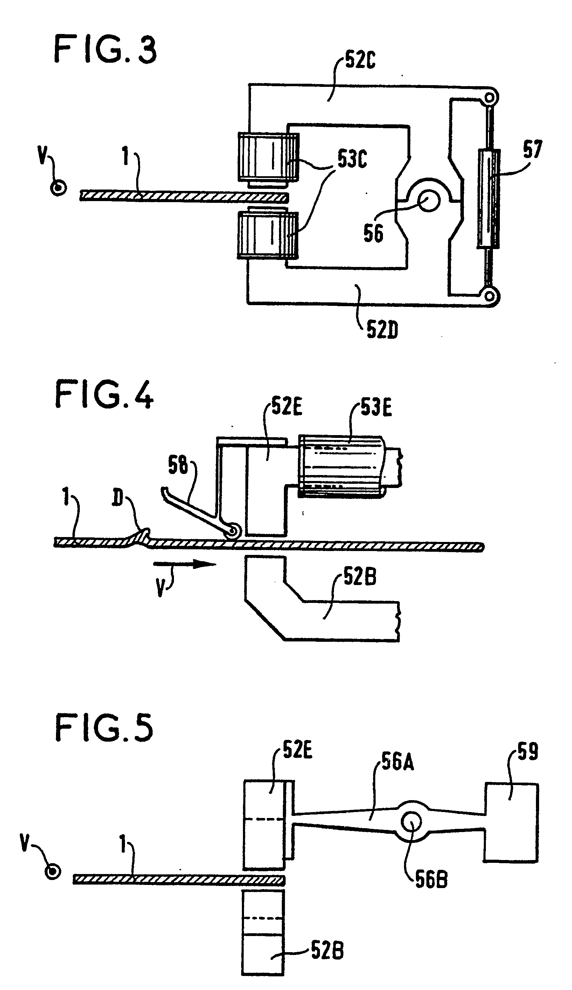

Le dispositif en C se prête en outre à un perfectionnement qui est décrit dans le brevet français n° 85/08684 et qui permet de réduire la valeur de l'entrefer : il consiste à articuler l'armature magnétique autour d'un axe parallèle au défilement de la tôle, comme indiqué sur la figure 3 qui représente une vue de face d'un troisième dispositif connu. On y voit deux demi-armatures 52C et 52D excitées par des bobines 53C et articulées autour d'un axe 56 perpendiculaire au plan de la figure, c'est-à-dire parallèle à la direction de défilement de la tôle 1 ; l'ouverture de l'entrefer peut-être ajustée grâce à un verin 57, et on peut ainsi adapter la valeur de l'entrefer aux différentes épaisseurs des tôles à traiter. On pourrait aussi réduire la marge de sécurité en commandant la longueur du vérin par des détecteurs qui enregistreraient les crêtes des défauts et transmettraient des ordres en conséquence au vérin. Mais cette dernière possibilité n'est pas utilisée car on craint les conséquences, catastrophiques pour le dispositif de chauffage, d'une défaillance du système de détection.

Les hommes du métier admettent pourtant que la sécurité du chauffeur est assurée s'il peut s'effacer ou s'escamoter aisément sous l'impact direct d'un défaut de la tôle.

Le problème se pose alors de trouver une disposition qui assure un tel escamotage sans faire apparaître d'effort dommageable lors de l'impact. Compte peut être tenu du fait que, en pratique, les défauts de la tôle ne forment des saillies dangereuses que vers le haut.

Une solution connue dans un quatrième dispositif de chauffage qui est du type en U consiste à munir une demie armature mobile 52E d'une rampe protectrice 58 (voir la figure 4 qui est une vue partielle de côté) et à suspendre cette demie armature, avec sa bobine d'excitation 53E à l'extrémité d'un bras oscillant 56A (voir la figure 5 qui est une vue de face, rampe et bobine enlevées). Ce bras est porté par un axe 56B et il est muni d'un contrepoids 59 grâce auquel on prétend minimiser l'effort nécessaire pour soulever la demie armature 52E.

Une telle solution utilisant un contrepoids s'appliquerait évidemment aussi à la chauffeuse du type en C à armature articulée représenté en figure 3.

En pratique des dispositifs utilisant cette solution ont été gravement endommagés par des défauts formant saillie verticale sur des tôles défilant à grande vitesse.

La présente invention a pour but de diminuer de manière simple les efforts qui sont appliqués à l'armature d'un dispositif de chauffage lors d'un impact entre cette armature et un défaut de la tôle défilante.

Et elle a pour objet un dispositif à armature articulée pour chauffage inductif au défilé,
  – ce dispositif étant adapté à chauffer un produit de grande longueur (1) qui défile sensiblement horizontalement selon sa direction longitudinale (V),
  – ce dispositif comportant au moins une bobine d'excitation (3) pour créer un champ magnétique alternatif de chauffage,
  – et une armature (2A, 2B, 2C, 2D) ferromagnétique constituant un circuit magnétique qui guide ledit champ vers un entrefer dans lequel ledit produit défile pour être chauffé par ce champ,
  – cette armature étant formée de divers tronçons d'amature sensiblement rectilignes dont l'un au moins descend verticalement jusqu'au dit entrefer et constitue une tête de chauffage (2C) au-dessus dudit produit à chauffer (1) de sorte qu'un défaut (D) formant saillie vers le haut sur ce produit pourrait venir heurter cette tête de chauffage et endommager le dispositif,

– une partie de cette armature étant une partie à articulation de sécurité qui comprend cette tête de chauffage et qui est articulée en rotation autour d'un axe d'articulation de sécurité horizontal pour permettre de soulever d'urgence cette tête de chauffage avant que le dispositif soit endommagé par ledit défaut formant saillie,

– caractérisé par le fait que ladite tête du chauffage (2C) est mobile par rapport au reste de ladite armature (2A, 2D, 2B) par articulation autour dudit axe d'articulation de sécurité (11), de manière à constituer à elle seule ladite partie à articulation de sécurité, et que la masse à mettre en mouvement pour soulever d'urgence cette tête présente un faible moment d'inertie de rotation autour de cet axe.

Le présent inventeur a trouvé que, dans des conditions d'exploitations normales du quatrième dispositif connu précédemment mentionné, les efforts les plus susceptibles d'être dangereux apparaissaient lors "du contact" du dispositif avec un défaut de la tôle défilante formant saillie abrupte, et que ces efforts étaient alors liés essentiellement à l'inertie globale des éléments liés au bras oscillant : la tôle défilant à vitesse constante, la "prise de contact" avec un défaut quelconque se traduit par un "choc". Il en résulte que la mise en place d'un contrepoids, si elle améliore l'équilibre statique du bras oscillant, augmente son inertie dans les situations "dynamiques" qui sont précisément celles qui sont les plus redoutables.

Selon la présente invention, la tête de chauffage est mécaniquement dissociée du reste du circuit magnétique afin que la masse à effacer en cas de contact avec un défaut soit réduite au minimum possible, c'est-à-dire à la partie du dispositif située au-dessus de la tôle défilante.

De préférence, selon l'invention, ledit axe d'articulation de sécurité (11) est orienté selon ladite direction transversale, et le tronçon (2A) de ladite armature au contact de ladite tête de chauffage (2C) s'étend selon ladite direction transversale dans le même plan vertical transversal que cette tête jusqu'à une face d'extrémité plane (10) perpendiculaire à cette direction,

– cette tête présentant une face latérale plane (10) perpendiculaire à cette même direction et sensiblement au contact de cette face d'extrémité du dit tronçon au contact, de manière que la rotation de cette tête autour dudit axe d'articulation de sécurité soit rendue possible tout en ne créant qu'un faible intervalle dans ledit circuit magnétique.

Selon un premier et un deuxième modes de mise en oeuvre de l'invention, respectivement pour un dispositif du type en C et du type en U, la partie haute de la dite tête de chauffage (2C) et ledit tronçon à son contact (2A) portent latéralement des organes d'articulation (12, 13) matérialisant ledit axe d'articulation de sécurité (11) à proximité de ce tronçon, sensiblement dans le plan horizontal de celui-ci et en arrière de celui-ci de manière à ne pas diminuer localement la section magnétique utile de ladite armature et de manière que la poussée longitudinale dudit défaut formant saillie (D) contre la partie basse de cette tête soulève cette partie.

Selon un troisième mode de mise en oeuvre de l'invention ledit axe d'articulation de sécurité (111) est disposé à distance en avant de ladite tête de chauffage (102C),

– cette tête portant, à distance en arrière, une rampe de glissement (117) qui s'élève obliquement vers l'arrière de manière qu'un dit défaut formant saillie (D) arrivant vers le dispositif rencontre d'abord cette rampe, puis glisse longitudinalement sous cette rampe en la soulevant et en soulevant en même temps cette tête par rotation autour de cet axe d'articulation.

On adopte de plus, de préférence et selon les circonstances, les dispositions suivantes :

– Ladite tête de chauffage (2C, 22C, 102C) porte une roulette (14, 34, 114) disposée de manière à venir en appui contre ledit défaut formant saillie (D) pour éviter un frottement contre ce défaut.

– Cette même tête (2C, 22C, 102C) porte une organe d'amortissement élastique (15, 35, 115) disposé de manière à fléchir sous le choc dudit défaut formant saillie (D) pour amortir ce choc.

– Cette même tête ( 2C, 102C) est munie d'une butée (16, 116) définissant sa position de service normal sans empêcher son soulèvement à l'arrivée du dit défaut formant saillie (D).

A l'aide des figures schématiques ci-jointes on va décrire plus particulièrement ci-après, à titre d'exemple non limitatif, comment l'invention peut être mise en oeuvre. Il doit être compris que les éléments mentionnés peuvent être remplacés par d'autres éléments assurant les mêmes fonctions techniques. Lorsqu'un même élément est représenté sur plusieurs figures il y est désigné par le même signe de référence.

Lorsqu'un de ces signes de référence a été employé ci-dessus entre parenthèses c'était aussi à simple titre d'exemple non limitatif et pour référence à ces même figures.

Rappelons que les figures 1 et 2 représentent des vues en perspective d'un premier et d'un deuxième dispositifs connus du type en U et du type en C,

– que la figure 3 représente une vue de face d'un troisième dispositif connu du type en C articulé,

– et que les figures 4 et 5 représentent des vues partielles de côté et de face d'un quatrième dispositif connu du type en U articulé avec contrepoids.

Les figures 6 et 7 représentent des vues de face et de dessus d'un premier dispositif selon ledit premier mode de mise en oeuvre de la présente invention.

La figure 8 représente un vue de dessus du même dispositif après séparation de la tête de chauffage.

La figure 9 représente une vue partielle de côté de ce même disposit.

La figure 10 représente une vue en perspective d'un deuxième dispositif selon ledit deuxième mode de mise en oeuvre de l'invention.

Les figures 11 et 12 représentent des vues partielles de côté d'un troisième et d'un quatrième dispositifs selon ledit troisième et selon un quatrième modes de mise en oeuvre de l'invention.

Ces quatre dispositifs présentent les dispositions précédemment mentionnées comme préférables selon l'invention. Le produit plat à chauffer est une tôle 1 défilant selon la flèche V.

Le premier dispositif selon l'invention est une chauffeuse en C aménagé selon l'invention.

L'armature est en trois éléments mécaniquement distincts. Un élément formé de deux tronçons 2A et 2D constitue une demie armature supérieure avec un autre élément constitué par une tête de chauffage 2C.

Un élément 2B constitue la demie armature inférieure qui est fixe. L'élément 2C est séparé de l'élément 2A, 2D par une interface de glissement plane repérée 10 perpendiculaire à la tôle et parallèle à sa vitesse de défilement ; il peut tourner autour d'un axe 11 qui constitue ledit axe d'articulation de sécurité et qui est également parallèle à la tôle mais perpendiculaire à sa vitesse de défilement ; il en résulte que l'élément 2C est solidarisé de l'élément 2A, c'est-à-dire qu'il accompagne exactement les mouvements de ce dernier quand celui-ci tourne d'un axe longitudinal d'articulation de réglage 6 sous l'action d'un vérin 7, pour régler l'épaisseur de l'entrefer E.

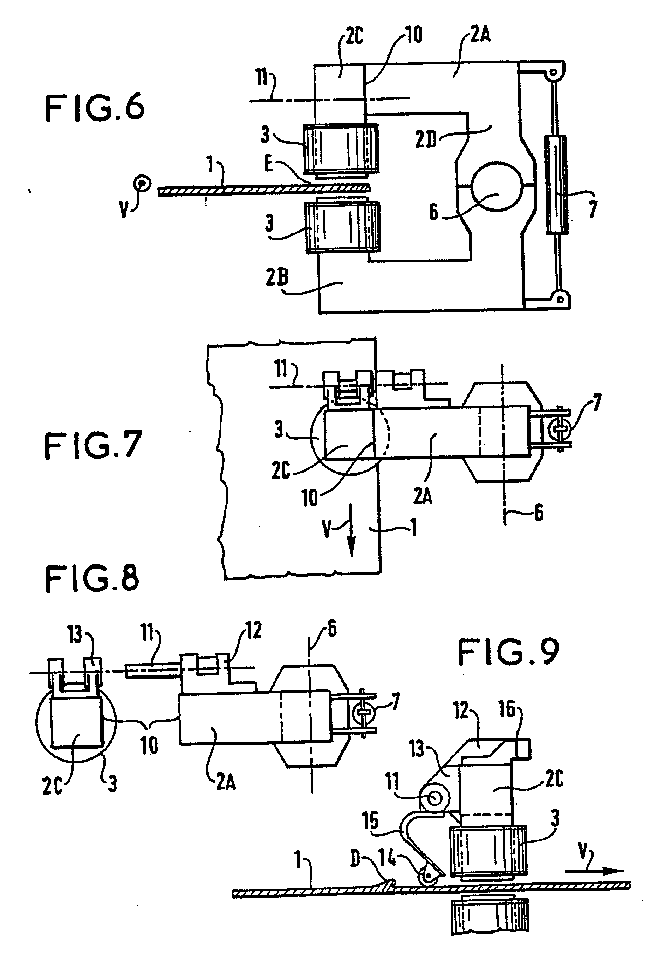

La figure 8 est une vue de dessus des éléments 2A et 2C séparés. On y voit que le tronçon 2A porte une structure latérale 12 qui maintient elle-même l'axe 11 ; la tête 2C porte une structure 13 constituant des paliers qui permettent de l'emmancher sur l'axe 11 de manière qu'elle tourne autour.

La figure 9 représente les éléments 2A, 2D et 2C assemblés.

On voit un organe de prise de contact avec les défauts de la tôle ; cet organe est réalisé ici sous la forme d'une roulette 14 solidarisée de la structure 13 par l'intermédiaire d'une liaison élastique 15 constituant le dit organe d'amortissement et constituée, par exemple, d'un ressort à lame dont la forme est adaptée aux divers types de défauts de la tôle afin de réduire l'effort de choc. En cas d'impact d'un défaut D, la roulette 14 entraîne la rotation de la tête 2C autour de l'axe 11, l'interface 10 glissant dans son plan ; l'élément 2C suit le mouvement de la roulette 14 à la déformation près de la lame 15. On prévoit une butée 16 qui évite le balancement de la tête en retour du mouvement.

Un avantage du dispositif est qu'il est relativement peu sensible aux efforts électro-magnétiques qui s'exercent sur la tête 2C : pour les défauts de petites amplitudes parce que le mouvement d'effacement est surtout parallèle à l'effort, pour les défauts de grandes amplitudes parce que la réduction de la section de passage du flux magnétique en 10 corrélative à la rotation de 2C autour de l'axe 11 a pour conséquence de réduire cet effort.

On peut évidemmment modifier ce dispositif sans sortir du cadre de l'invention : Par exemple, en intégrant une barre de rappel élastique entre les structures 12 et 13 à travers l'axe 11, ou en utilisant une autre forme de l'organe de prise de contact.

Les bobines d'excitation sont représentées en 3.

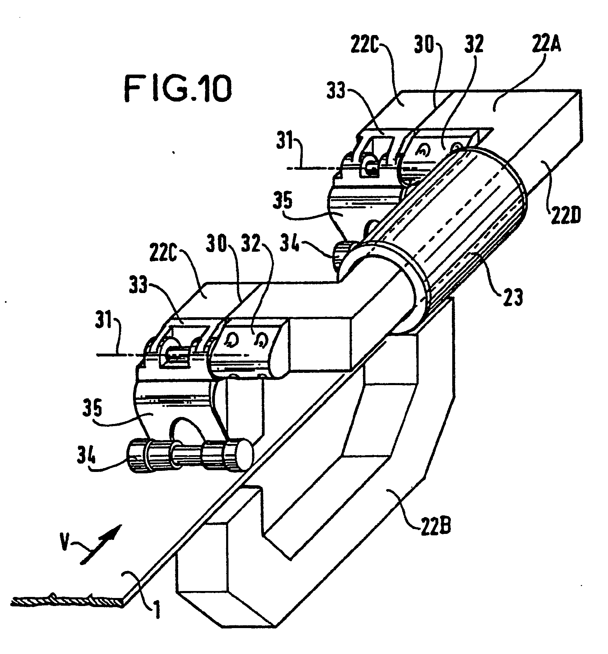

L'invention est applicable aux chauffeuses en U, sous la forme du deuxième dispositif, comme le montre la figure 10. Dans ce cas, on a deux interfaces de glissement 30 par chauffeur, et elles sont formées chacune au bout d'un tronçon transversal 22A. Ce dernier constitue un tronçon précédemment mentionné comme au contact de la tête de chauffage et il est orienté à 90° d'un tronçon longitudinal 22D, qui porte la bobine d'excitation 23 et un tronçon 22A à chacune de ses deux extrémités. Il y a de même deux têtes de chauffage 22C qui se succèdent longitudinalement. Les éléments de ce deuxième dispositif portent des numéros de référence augmentés de 20 par rapport à ceux des éléments analogues du premier.

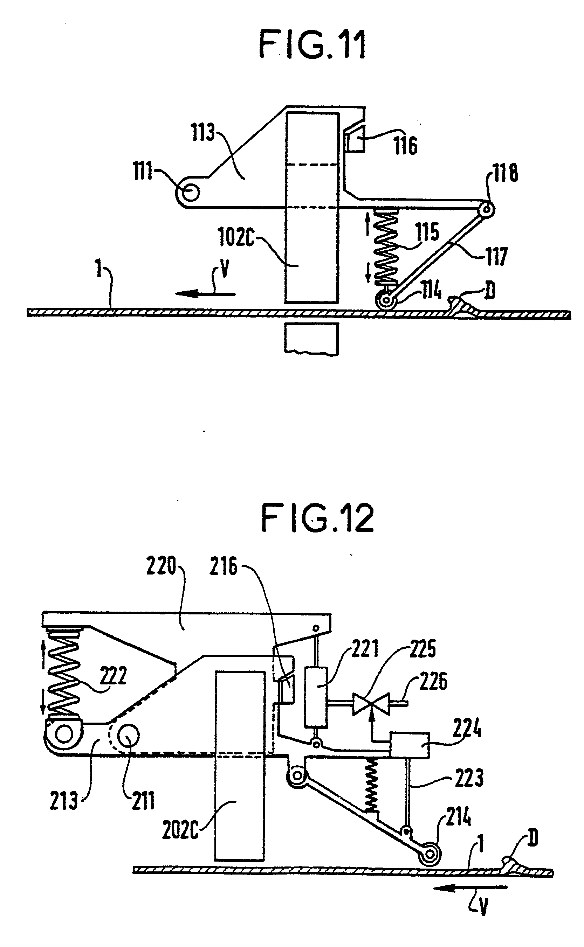

Dans le troisième dispositif selon l'invention représenté sur la figure 11, une rampe de glissement 117 montant obliquement vers l'arrière peut osciller autour d'un axe transversal 118 sous le choc du défaut D, avec rappel par un ressort d'amortissement 115.

Cet axe, ce ressort, et l'axe d'articulation de sécurité sont portés par la tête de chauffage 102C, les deux premiers à l'arrière de cette tête, ce dernier à l'avant.

Les éléments de ce troisième dispositif portent des numéros augmentés de 100 par rapport aux éléments analogues du premier dispositif selon l'invention.

Les avantages de la présente invention apparaissent aussi dans le cas où on veut commander l'escamotage de la tête de chauffage non plus par un impact direct d'un défaut de la tôle sur une pièce transmettant cet impact à cette tête, mais par un système préarmé dont le déclenchement est provoqué par un impact du défaut sur ce dispositif, c'est-à-dire sans l'intermédiaire d'une chaîne de contrôle, et provoque un relèvement instantané de la tête par mise en oeuvre d'une énergie préalablement stockée dans ce but. Un tel système, connu en soi, est incorporé dans un quatrième mode de mise en oeuvre représenté sur la figure 12. Conformément à cette figure un support fixe 220 sert d'appui à un vérin 221 et à un ressort 222 qui poussent tous deux, de manière quasi-équilibrée en rotation, sur une pièce 213 solidaire de la tête de chauffage 202C. Cette dernière est maintenue en position de travail contre une butée 216 par l'action prépondérante du vérin 221. En cas d'impact d'un défaut sur une roulette 214, un palpeur 223 agit sur une gâchette 224 qui provoque le vidange du vérin par une vanne 225 et une conduite de purge 226 ; la poussée du ressort 222 provoque alors le relèvement de la tête par pivotement autour de l'axe d'articulation de sécurité 211.

Un tel système serait très onéreux si le mobile à relever présentait une grande inertie comme le bras supérieur de l'armature en C fig.4 ; sa réalisation est considérablement facilitée si on l'applique à une tête de chauffage articulée selon l'invention.

Il apparaît donc que, de manière plus générale, selon ce quatrième mode de mise en oeuvre de l'invention, le dispositif de chauffage comporte un système préarmé de manoeuvre de sécurité 221, 222 comportant des moyens de stockage préalable d'une énergie de manoeuvre 222 et des moyens de déclenchement 214, 224, 225, 221 propres à être eux-mêmes déclenchés par l'arrivée d'un dit défaut formant saillie D pour déclencher alors la mise en oeuvre de cette énergie de manoeuvre de manière à soulever d'urgence ladite tête de chauffage 202 C par rotation autour dudit axe d'articulation de sécurité 211.

## Revendications

1. Dispositif à armature articulée pour chauffage inductif au défilé d'un produit plat de grande longueur (1) qui défile sensiblement horizontalement selon sa direction longitudinale (V),
ce dispositif comportant au moins une bobine d'excitation (3) pour créer un champ magnétique alternatif de chauffage,
et une armature ( 2A, 2B, 2C, 2D) ferromagnétique constituant un circuit magnétique qui guide ledit champ vers un entrefer dans lequel ledit produit défile pour être chauffé par ce champ,
cette armature étant formée de divers tronçons d'armature sensiblement rectilignes dont l'un au moins descend verticalement jusqu'au dit entrefer et constitue une tête de chauffage (2C) au-dessus dudit produit à chauffer (1) de sorte qu'un défaut (D) formant saillie vers le haut sur ce produit pourrait venir heurter cette tête de chauffage et endommager le dispositif, une partie de cette armature étant une partie à articulation de sécurité qui comprend cette tête de chauffage et qui est articulée en rotation autour d'un axe d'articulation de sécurité horizontal pour permettre de soulever d'urgence cette tête de chauffage avant que le dispositif soit endommagé par ledit défaut formant saillie,
caractérisé par le fait que ladite tête du chauffage (2C) est mobile par rapport au reste de ladite armature (2A, 2D, 2B ) par articulation autour dudit axe d'articulation de sécurité (11), de manière à constituer à elle seule ladite partie à articulation de sécurité, et que la masse à mettre en mouvement pour soulever d'urgence cette tête présente un faible moment d'inertie de rotation autour de cet axe.

2. Dispositif selon la revendication 1, caractérisé par le fait que ledit axe d'articulation de sécurité (11) est orienté transversalement par rapport à la dite direction longitudinale (V).

3. Dispositif selon la revendication 2, caractérisé par le fait que le tronçon (2A) de ladite armature au contact de ladite tête de chauffage (2C) s'étend dans le même plan vertical transversal que cette tête jusqu'à une face d'extrémité (10) plane perpendiculaire au dit axe (11),
cette tête présentant une face latéral plane sensiblement au contact de cette face d'extrémité (10) , de manière que la rotation de cette tête autour dudit axe d'articulation de sécurité (11) soit rendue possible tout en ne créant qu'un faible intervalle dans ledit circuit magnétique .

4. Dispositif selon la revendication 3, caractérisé par le fait que la partie haute de la dite tête de chauffage (2C) et ledit tronçon à son contact (2A) portent latéralement des organes d'articulation (12, 13) matérialisant ledit axe d'articulation de sécurité (11) à proximité de ce tronçon, sensiblement dans le plan horizontal de celui-ci et en arrière de celui-ci de manière à ne pas diminuer localement la section magnétique utile de ladite armature et de manière que la poussée longitudinale dudit défaut formant saillie (D) contre la partie basse de cette tête soulève cette partie.

5. Dispositif selon la revendication 3, caractérisé par le fait que le défilement du produit étant d'arrière en avant du dispositif, ledit axe d'articulation de sécurité (111) est disposé à distance en avant de ladite tête de chauffage (102C),
cette tête portant , à distance en arrière , une rampe de glissement (117) qui s'élève obliquement vers l'arrière de manière qu'un dit défaut formant saillie (D) arrivant vers le dispositif rencontre d'abord cette rampe, puis glisse longitudinalement sous cette rampe en la soulevant et en soulevant en même temps cette tête par rotation autour de cet axe d'articulation.

6. Dispositif selon la revendication 1, caractérisé par le fait que ladite tête de chauffage (2C, 22C, 102C ) porte une roulette ( 14, 34, 114 ) disposée de manière à venir en appui contre ledit défaut formant saillie (D).

7. Dispositif selon la revendication 1, caractérisé par le fait que ladite tête de chauffage (2C, 22C, 102C) porte une organe d'amortissement élastique (15, 35, 115) disposé de manière à fléchir sous le choc dudit défaut formant saillie (D) pour amortir ce choc.

8. Dispositif selon la revendication 1, caractérisé par le fait que ladite tête de chauffage (2C, 102C) est munie d'une butée (16, 116) définissant sa position de service normal sans empêcher son soulèvement à l'arrivée du dit défaut formant saillie (D).

9. Dispositif selon la revendication 3, caractérisé par le fait qu'il comporte un système préarmé de manoeuvre de sécurité (222, 221) comportant des moyens de stockage préalable d'une énergie de manoeuvre (222) et des moyens de déclenchement (214, 224, 225, 221) propres à être eux-mêmes déclenchés par l'arrivée d'un dit défaut formant saillie (D) pour déclencher alors la mise en oeuvre de cette énergie de manoeuvre de manière à soulever d'urgence ladite tête de chauffage (202 C) par rotation autour dudit axe d'articulation de sécurité (211).

**Patentansprüche**

1. Vorrichtung mit schwenkbarem Magnetkreis zur induktiven Erwärmung eines durchlaufenden flachen Erzeugnisses (1) großer Länge, das sich im wesentlichen waagrecht in seiner Längsrichtung (V) bewegt,
wobei die Vorrichtung mindestens eine Induktionsspule (3) zur Erzeugung eines magnetischen Erwärmungswechselfeldes,
und einen ferromagnetischen Kreis (2A, 2B, 2C, 2D) aufweist, der einen magnetischen Kreis bildet, welcher das Feld an einen Luftspalt führt, welchen das Erzeugnis zur Erwärmung im Feld durchläuft,
wobei der Magnetkreis aus verschiedenen im wesentlichen geradlinigen Kernabschnitten besteht, von denen mindestens einer senkrecht zum Luftspalt abwärts verläuft und über dem zu erwärmenden Erzeugnis (1) einen Heizkopf (2C) bildet, derart, daß eine auf dem Erzeugnis nach oben vorspringende Fehlstelle (D) am Heizkopf anstoßen und die Vorrichtung beschädigen könnte, wobei ein Teil des Magnetkreises ein Sicherheitsschwenkabschnitt ist, der den Heizkopf einschließt und drehgelenkig um eine waagrechte Sicherheitsschwenkachse gelagert ist, um den Heizkopf im Notfall vor der Beschädigung der Vorrichtung durch die vorspringende Fehlstelle anzuheben, dadurch gekennzeichnet, daß der Heizkopf (2C) relativ zum übrigen Teil des Magnetkreises (2A, 2D, 2B) durch gelenkige Lagerung auf der Sicherheitsschwenkachse (11) beweglich ist, derart, daß er für sich allein den Sicherheitsschwenkabschnitt bildet, und daß die im Notfall zum Anheben des Kopfs in Bewegung zu versetzende Masse ein kleines Trägheitsdrehmoment um diese Achse besitzt.

2. Vorrichtung nach Anspruch 1, dadurch gekennzeichnet, daß die Sicherheitsschwenkachse (11) quer zur Längsrichtung (V) orientiert ist.

3. Vorrichtung nach Anspruch 2, dadurch gekennzeichnet, daß der mit dem Heizkopf (2C) in Berührung stehende Abschnitt (2A) des Magnetkreises sich in der gleichen senkrechten Querebene erstreckt wie der Kopf bis zu einer flachen, senkrecht zur Achse (11) liegenden Endfläche,
wobei der Kopf eine flache Seitenfläche besitzt, die im wesentlichen in Berührung mit der Endfläche (10) steht, derart, daß die Drehung des Kopfes um die Sicherheitsschwenkachse (11) bei gleichzeitiger Schaffung eines nur engen Spalts im magnetischen Kreis möglich ist.

4. Vorrichtung nach Anspruch 3, dadurch gekennzeichnet, daß der obere Abschnitt des Heizkopfs (2C) und der mit ihm in Berührung stehende Abschnitt (2A) seitlich Schwenkorgane (12, 13) tragen, die die Sicherheitsschwenkachse (11) in der Nähe dieses Abschnittes, im wesentlichen in der waagrechten Ebene und hinter derselben, bilden, derart, daß örtlich der magnetische Nutzquerschnitt des Magnetkreiss nicht verkleinert und der Längsstoß der vorspringenden Fehlstelle (D) gegen die untere Partie des Kopfes diese Partie anhebt.

5. Vorrichtung nach Anspruch 3, dadurch gekennzeichnet, daß bei einem Durchlauf des Erzeugnisses von hinten nach vorne durch die Vorrichtung die Sicherheitsschwenkachse (111) mit Abstand vor dem Heizkopf (102C) angeordnet ist,
wobei der Kopf mit Abstand nach hinten eine Gleitrampe (117) trägt, die schräg nach hinten aufsteigt, derart, daß eine den Vorsprung bildende Fehlstelle (D) bei Erreichen der Vorrichtung zuerst auf die Rampe trifft, dann unter der Rampe entlang gleitet und sie anhebt und dabei gleichzeitig den Kopf durch Drehen um die Schwenkachse hebt.

6. Vorrichtung nach Anspruch 1, dadurch gekennzeichnet, daß der Heizkopf (2C, 22C, 102C) eine Rolle (14, 34, 114) trägt, die so angeordnet ist, daß sie an der vorspringenden Fehlstelle (D) anliegt.

7. Vorrichtung nach Anspruch 1, dadurch gekennzeichnet, daß der Heizkopf (2C, 22C, 102C) ein elastisches Dämpfungsorgan (15, 35, 115) trägt, das so angeordnet ist, daß es unter dem Stoß der vorspringenden Fehlstelle (D) nachgibt, um den Stoß abzuschwächen.

8. Vorrichtung nach Anspruch 1, dadurch gekennzeichnet, daß der Heizkopf (2C, 102C) mit einem Anschlag (16, 116) versehen ist, der die normale Betriebsstellung des Kopfs definiert, ohne jedoch seine Anhebung beim Erreichen der vorspringenden Fehlstelle (D) zu behindern.

9. Vorrichtung nach Anspruch 3, dadurch gekennzeichnet, daß sie ein vorgespanntes Sicherheitsbetätigungssystem (222, 221) mit Mitteln zum vorherigen Speichern einer Betätigungsenergie (222), sowie Auslösemittel (214, 224, 225, 221) aufweist, die ihrerseits durch die Ankunft der vorspringenden Fehlstelle (D) ausgelöst werden können, um dann die Freisetzung der Betätigungsenergie auszulösen, derart, daß der Heizkopf (202C) im Notfall durch Drehen um die Sicherheitsschwenkachse (211) angehoben wird.

## Claims

1. A hinged core device for inductive heating of a moving flat product (1) having a long length and running substantially horizontally along its longitudinal direction (V),
said device comprising at least one excitation coil (3) for setting up an alternating magnetic field for heating purposes,
and a ferromagnetic core ( 2A, 2B, 2C, 2D) constituting a magnetic circuit which guides said field to an air gap through which the product runs in order to be heated by said field, said core being formed in a plurality of substantially rectilinear core lengths, at least one of which extends vertically down to said air gap and constitutes a heating head (2C) above said product (1) to be heated, in such a manner that a defect (D) projecting upwardly from said product could strike said heater and damage the device,
a portion of said core being a safety hinge part comprising said heater head and being hinged to rotate about a horizontal safety hinge axis in order to lift said heater head urgently before the device is damaged by said projecting defect,
characterized in that said heater head (2C) is movable relative to the remainder of said core (2A, 2D, 2B) by turning about said safety hinge axis (11) in order to constitute alone said safety hinge part, and in that the mass to be moved in order to lift said head urgently has a low moment of inertia for rotation about said axis.

2. A device according to claim 1, characterized in that said safety hinge axis (11) is oriented perpendicular to said longitudinal direction (V).

3. A device according to claim 2, characterized in that the length (2A) of said core in contact with said heater head (2C) extends in the same transverse vertical plane as said head up to a plane end face (10) perpendicular to said axis (11),
said head having a plane side face substantially in contact with said end face (10) such that rotation of said head about said safety hinge axis (11) is made possible while creating only a small gap in said magnetic circuit.

4. A device according to claim 3, characterized in that the top portion of said heater head (2C) and said length (2A) in contact therewith laterally carry hinge members (12, 13) which constitute said safety hinge axis (11) in the proximity of said length, substantially in the horizontal plane thereof and behind it so as to avoid locally reducing the useful magnetic cross-section of said core and so that the longitudinal thrust from said projecting defect (D) against the bottom portion of said head raises said part.

5. A device according to claim 3, characterized in that the run of the product is in the direction from back to front of the device, with said safety hinge axis (111) being disposed at a distance behind said heater head (102C),
said head carrying a sliding slope (117) at a distance behind, which rises obliquely and backwardly in such a manner that said projecting defect (D) arriving at the device encounters said slope first, then slides longitudinally under said slope, thereby lifting it, and simultaneously lifting said head by rotation about said hinge axis.

6. A device according to claim 1, characterized in that said heater head (2C, 22C, 102C) carries a wheel (14, 34, 114) disposed in such a manner as to bear against said projecting defect (D).

7. A device according to claim 1, characterized in that said heater head (2C, 22C, 102C) carries a resilient damping member (15, 35, 115) disposed in such a manner as to bend under the impact from said projecting defect in order to damp said impact.

8. A device according to claim 1, characterized in that said heater head (2C, 102C) is provided with an abutment (16, 116) defining its normal operating position without preventing it from being raised on the arrival of said projecting defect (D).

9. A device according to claim 3, characterized in that it includes a preloaded safety operating system (222, 221) including means (222) for prior storage of operating energy and trigger means (214, 224, 225, 221) which are themselves suitable for being directly triggered by the arrival of a projecting defect (D) in order to trigger the use of said operating energy in such a manner as to raise said heater head (202C) urgently by rotation about said safety hinge axis (211).

# FIG.1

# FIG. 2

# FIG.3

# FIG.4

# FIG.5

FIG.6

FIG.7

FIG.8

FIG.9

FIG.10

# FIG.11

# FIG.12